# EUROPEAN PATENT APPLICATION

(11) **EP 4 366 053 A1**
(43) Date of publication of application: **08.05.2024**
(21) Application number: 22833012.2
(22) Date of filing: 24.06.2022
(51) Int. Cl.: H01M 50/204, H01M 10/613, H01M 10/643, H01M 10/6555, H01M 50/105, H01M 50/211, H01M 50/227, H01M 50/342, H01M 50/35, H01M 50/367

(54) **BATTERY MODULE**

(30) Priority: 28.06.2021 JP 2021106635
(71) Applicant: Panasonic Intellectual Property Management Co., Ltd., Kadoma-shi, Osaka 571-0057 (JP)
(72) Inventor: SHIMIZU, Keisuke, Kadoma-shi, Osaka 571-0057 (JP)
(74) Representative: Novagraaf International SA
(86) International application number: PCT/JP2022/025229
(87) International publication number: WO 2023/276865

(57) **Abstract**

A battery module according to one aspect of the present disclosure includes a battery case and a plurality of laminate batteries stored in the battery case. Each of the plurality of laminate batteries includes an electrode assembly, a container that accommodates the electrode assembly, and a seal portion that seals a periphery of the container. The container includes an exhaust part and a body. The inside of the battery case is filled with a mold resin with a distal end of the exhaust part left exposed.

## Description

### TECHNICAL FIELD

The present disclosure relates to a battery module.

### BACKGROUND ART

A battery module generally includes a plurality of secondary batteries and a battery case that accommodates the plurality of secondary batteries. In recent years, use of a laminate battery as a secondary battery has been studied from the viewpoint of weight reduction. In addition, the secondary battery may generate gas during an abnormality, and thus the battery module is also required to have a gas exhaust function in order to prevent rupture. PTL 1 discloses a battery module in which a resin fixing member is formed by filling a mold resin into a battery case accommodating a laminate battery while a resin cut-away portion to be served as a gas exhaust path is provided.

### Citation List

### Patent Literature

PTL 1: Unexamined Japanese Patent Publication No. 2012-190734

### SUMMARY OF THE INVENTION

In the battery module, when a plurality of batteries are used, it is necessary to prevent abnormal overheat from spreading to adjacent batteries one after another even if a combustible high-temperature gas is discharged due to abnormal overheat of a single battery. Concerns for the battery module disclosed in PTL 1 include occurrence of heat conduction between adjacent batteries due to a resin cut-away portion provided at a portion in contact with the laminate battery. As described above, in the technique disclosed in PTL 1, insufficient consideration has been given to battery damage due to spread of abnormal overheating. Thus, this technique has room for improvement.

An object of the present disclosure is to provide a battery module in which expansion of battery damage due to spread of overheat of an abnormal battery is prevented and an exhaust path from a laminate battery is reserved.

A battery module according to an aspect of the present disclosure includes a battery case and a plurality of laminate batteries being stored in the battery case. Each of the plurality of laminate batteries includes an electrode assembly, a container configured to accommodate the electrode assembly, and a seal portion configured to seal a periphery of the container. The container includes an exhaust part and a body. The battery case is filled with a mold resin with a distal end of the exhaust part left exposed.

In the battery module according to an aspect of the present disclosure, the body may be buried in the mold resin.

In the battery module according to an aspect of the present disclosure, each of the plurality of laminate batteries may include a plurality of containers including the containers.

In the battery module according to an aspect of the present disclosure, the exhaust part of each of the plurality of containers may protrude beyond the body in an axial direction of the electrode assembly from one side of the electrode assembly of the body.

In the battery module according to an aspect of the present disclosure, the seal portion of each of the plurality of laminate batteries on a line extending from the distal end of the exhaust part is openable for formation of an exhaust path for a gas to be discharged from the electrode assembly, and the exhaust path may be disposed between an inner surface of the battery case and an upper surface of the mold resin filled into the battery case.

The battery module according to an aspect of the present disclosure can prevent expansion of battery damage due to spread of overheat of an abnormal battery and reserve an exhaust path from a laminate battery.

### BRIEF DESCRIPTION OF THE DRAWINGS

Fig. 1 is an exploded perspective view of a battery module according to an example of an exemplary embodiment.
Fig. 2 is a plan view of a part of the inside of a battery case in the battery module according to the example of the exemplary embodiment as viewed from above.
Fig. 3 is a cross-sectional view taken along line A-A in Fig. 2.

### DESCRIPTION OF EMBODIMENT

Hereinafter, an exemplary embodiment according to the present disclosure is described in detail with reference to the accompanying drawings. It is envisaged from a beginning that if a plurality of exemplary embodiments and modified examples are described below, technical features of the plurality of exemplary embodiments and modified examples are appropriately combined to make new exemplary embodiments. Those configuration elements described in the following that are not recited in independent claims representing the highest concept are illustrated herein as optional configuration elements and are not essential.

The accompanying drawings include schematic views, and dimensional ratios between a depth, a width, a height, and the like of each member do not necessarily coincide among different drawings. In the present description, the term "substantial/substantially" is used in the same meaning as the term "approximate/approximately", and the requirement "substantially..." is satisfied if being substantially the same.

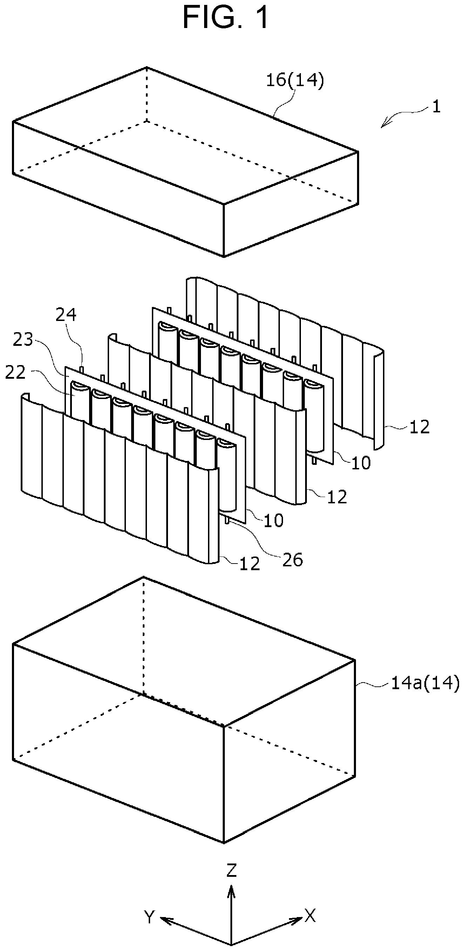

First, an outline of battery module 1 is described with reference to Fig. 1. Fig. 1 is an exploded perspective view of battery module 1 according to an example of an exemplary embodiment. Battery module 1 includes battery case 14 and a plurality of laminate batteries 10 stored in battery case 14 in a standing orientation.

In the present exemplary embodiment, two laminate batteries 10 stand so that the principal surface is substantially perpendicular to the bottom surface of battery case 14. A total of three partition walls 12 are provided between two laminate batteries 10 and around laminate batteries 10. Note that the number of laminate batteries 10 stored in battery module 1 is not particularly limited. The number of partition walls is also not particularly limited. Hereinafter, an X direction is defined as a depth direction, a Y direction is defined as a width direction, and a Z direction is defined as a height direction. In particular, a +Z direction is defined as an upward direction, and a -Z direction is defined as a downward direction. The placement direction of battery module 1 during use is not particularly limited. For example, battery module 1 may be used with the Z direction being horizontal to the ground.

Battery case 14 includes case body 14a and lid 16 that closes an opening of case body 14a. Battery case 14 forms a housing of battery module 1 and stores laminate batteries 10 and partition walls 12. The shape of battery case 14 is not particularly limited as long as laminate batteries 10 and partition walls 12 can be stored inside, but for example, case body 14a has a rectangular-parallelepiped shape having an opening on the upper surface. Lid 16 has a rectangular-parallelepiped shape having an opening on the lower surface. Lid 16 is fitted to case body 14a to close the upper opening of case body 14a. Battery case 14 is filled with a mold resin (not illustrated in Fig. 1). That is, the gap between laminate battery 10 and partition wall 12 accommodated in battery case 14 is filled with the mold resin. Note that battery case 14 generally includes an external terminal electrically connected to laminate battery 10 housed in battery case 14, but the external terminal is omitted in Fig. 1.

Laminate battery 10 is mainly used as a motive power source. Laminate battery 10 is used as a power source of an electric device driven by a motor, such as an electric car, an electric power tool, an electric power-assisted bicycle, an electric motorcycle, an electric wheelchair, an electric tricycle, or an electric cart. However, the application of laminate battery 10 is not limited, and laminate battery 10 may be used as a power source of various electric devices used indoors and outdoors, such as a cleaner, a wireless device, a lighting device, a digital camera, and a video camera.

Laminate battery 10 includes an electrode assembly, container 22 that accommodates the electrode assembly, and seal portion 23 that seals the periphery of container 22. Each of laminate batteries 10 may include a plurality of containers. In the present exemplary embodiment, laminate battery 10 includes the electrode assembly having a cylindrical shape in each of eight containers 22 arranged in the width direction. In addition to the electrode assembly, container 22 contains, for example, an electrolyte solution. The electrolyte solution is, for example, a non-aqueous electrolyte containing a non-aqueous solvent and an electrolyte salt dissolved in the non-aqueous solvent.

The exterior body of laminate battery 10 includes two laminate sheets. As the laminate sheet, a sheet formed by laminating a metal layer and a resin layer can be used. The laminate sheet includes, for example, two resin layers sandwiching a metal layer, and one of the resin layers includes a resin that can be thermo-compressed. Examples of the metal layer include an aluminum layer.

The outer shape of laminate battery 10 is, for example, a substantially rectangular shape in plan view. In laminate battery 10, the laminate sheets are joined to each other to form seal portion 23. With this process, container 22 in which the electrode assembly and the like are accommodated is hermetically sealed. In the present exemplary embodiment, seal portion 23 is formed at an edge of laminate battery 10 and between containers 22. In other words, seal portion 23 couples adjacent containers 22 to each other while container 22 is sealed.

Container 22 is a portion surrounded by seal portion 23 and is provided by forming a recess that can accommodate the electrode assembly at at least one of the two laminate sheets. In the present exemplary embodiment, the recesses are respectively formed at both of the two laminate sheets. Container 22 bulges on both sides in the depth direction.

The electrode assembly having a cylindrical shape has a wound structure in which strip-shaped electrodes (a positive electrode and a negative electrode) are wound with a separator interposed therebetween. Note that the shape of the electrode assembly is not limited to the cylindrical shape. The number of electrode assemblies included in laminate battery 10 is also not particularly limited. The structure of the electrode assembly is not limited to the wound structure, and may be, for example, a laminated structure. In the laminated structure, a plurality of positive electrodes and a plurality of negative electrodes are alternately stacked with separator interposed therebetween..

At the upper end of laminate battery 10, first electrode lead 24 extends from a position corresponding to each electrode assembly. At the lower end of laminate battery 10, second electrode lead 26 extends from a position corresponding to each electrode assembly. That is, at each of the upper end and the lower end of laminate battery 10, the electrode leads extend by the number equal to the number of electrode assemblies.

For example, one end of first electrode lead 24 is connected to the positive electrode in the electrode assembly, and one end of second electrode lead 26 is connected to the negative electrode in the electrode assembly. First electrode lead 24 may be connected to the negative electrode, and second electrode lead 26 may be connected to the positive electrode. In addition, both first electrode lead 24 and second electrode lead 26 may extend from either one of the upper end or the lower end of laminate battery 10. Note that, generally, a current collector such as a metal sheet is connected to each of first electrode lead 24 and second electrode lead 26, and the current collector member is further connected to an external terminal provided on battery case 14 or lid 16. However, in Fig. 1, an electrical connection member such as a current collector member or an external terminal is omitted.

The plurality of laminate batteries 10 may be close-packed in battery module 1 provided that safety is considered. For example, adjacent laminate batteries 10 may be disposed such that the electrode assembly of one laminate battery 10 is positioned between the adjacent electrode assemblies of other laminate battery 10. That is, the adjacent laminate batteries 10 may be disposed to be shifted in the width direction so that the thickness in the depth direction is reduced.

In the present exemplary embodiment, partition wall 12 is provided between two laminate batteries 10 and around two laminate batteries 10, but partition wall 12 may be provided only between the plurality of laminate batteries 10. Partition wall 12 is placed in a standing orientation similarly to laminate battery 10, and is, for example, taller than laminate battery 10. Partition wall 12 has, for example, a function of holding laminate battery 10 until the mold resin is solidified and positioning laminate battery 10. Partition wall 12 may have, for example, a corrugated plate shape in which protrusions and recesses are repeated along the shape of container 22 bulging from laminate battery 10 or may be a flat plate.

The material of partition wall 12 is not particularly limited, but preferably has insulating properties. Examples of a material of partition wall 12 include thermoplastic resin such as polypropylene (PP), polybutylene terephthalate (PBT), polycarbonate (PC), and Noryl (registered trademark) resin (modified PPE); elastic materials such as polyurethane; and heat insulator such as silica. In addition, since the exterior of laminate battery 10 has insulating properties, the heat dissipation properties of laminate battery 10 may be improved by using a metal sheet that is more excellent in heat dissipation properties than mold resin 20 such as aluminum or an aluminum alloy for partition wall 12.

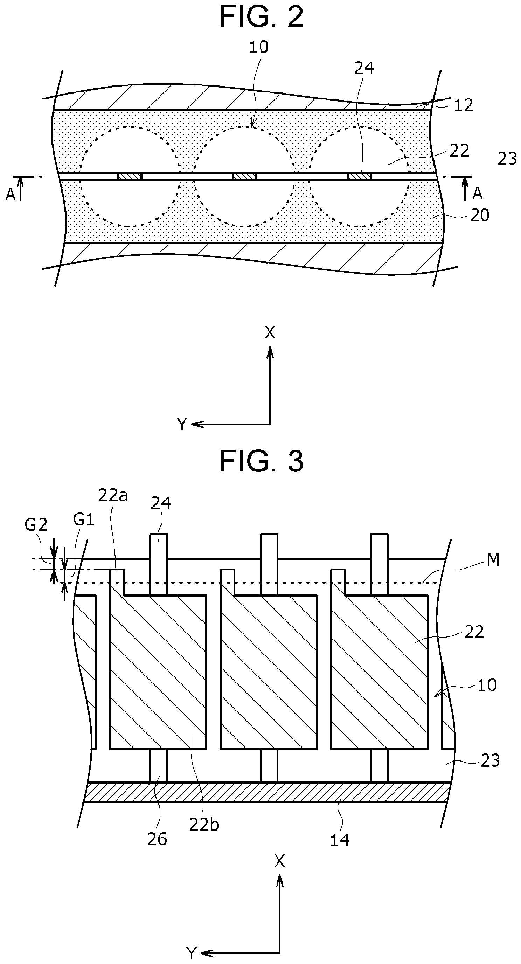

Next, a configuration of the inside of battery case 14 in battery module 1 is described with reference to Figs. 2 and 3. Fig. 2 is a plan view of a part of the inside of battery case 14 in battery module 1 according to the example of the exemplary embodiment as viewed from above. Fig. 3 is a cross-sectional view taken along line A-A in Fig. 2.

As illustrated in Fig. 2, battery case 14 is filled with mold resin 20. The operation of filling the inside of battery case 14 with mold resin 20 includes pouring the mold resin into case body 14a from the upper opening of case body 14a while laminate battery 10 and partition wall 12 are positioned in a standing orientation with the upper opening facing upward. Battery case 14 is filled with mold resin 20, so that the peripheral batteries is protected from overheat due to abnormality of laminate battery 10. Thus, catching fire can be prevented. The upper ends of the plurality of laminate batteries 10 protrude from the upper surface of mold resin 20. By protruding the upper end of laminate battery 10 from the upper surface of mold resin 20, an exhaust path can be provided when an abnormality occurs. Specifically, due to the pressure of the gas generated in container 22, the portion between the two laminate sheets forming seal portion 23 at the upper end of laminate battery 10 is opened to form the exhaust path.

Examples of mold resin 20 include acrylonitrile butadiene styrene (ABS) resin, polyvinyl chloride (PVC) resin, polycarbonate (PC) resin, polypropylene (PP) resin, polyethylene (PE) resin, polyamide (PA) resin, and urethane-based resin.

As illustrated in Fig. 3, the periphery of container 22 is surrounded by seal portion 23 and hermetically sealed. Container 22 includes exhaust part 22a and body 22b. Exhaust part 22a is a portion protruding upward from one side of the electrode assembly of body 22b. When the internal pressure of container 22 increases during an abnormality, seal portion 23 of laminate battery 10 on a line extending from the distal end of exhaust part 22a is opened, and the gas is discharged to the atmosphere from the upper end of laminate battery 10. The position where exhaust part 22a is provided is not particularly limited but may be provided at a part of the outer edge of body 22b as illustrated in Fig. 3. The term "upward" used here indicates an upward direction when battery case 14 is filled with the mold resin. The term "upward" corresponds to the X direction in Fig. 3 and one side in the axial direction of the electrode assembly, and indicates one side in the standing direction of laminate battery 10. The term "upper surface" used here as well as the term "upper surface" used in the claims indicates a surface in the upward direction upon filling of the mold resin into battery case 14.

Body 22b is a portion that accommodates the electrode assembly and the electrolyte solution. The outer shape of body 22b is a cylindrical shape and is a substantially rectangular shape in plan view as illustrated in Fig. 3. First electrode lead 24 extends from the upper end of body 22b, and second electrode lead 26 extends from the lower end of body 22b. A current collector member such as a metal sheet is connected to each of first electrode lead 24 and second electrode lead 26. First electrode leads 24 of the plurality of laminate batteries 10 are connected to each other, and second electrode lead 26 of the plurality of laminate batteries 10 are connected to each other. The plurality of laminate batteries 10 are accordingly connected in parallel.

In Fig. 3, M denoted by a dotted line represents the upper surface of mold resin 20. That is, the space between the dotted line and the bottom surface of case body 14a is filled with mold resin 20. In the present exemplary embodiment, body 22b is buried in mold resin 20. As a result, since body 22b accommodating the electrode assembly can be surrounded by mold resin 20, battery damage due to heat conduction to batteries around the abnormal battery can be more remarkably reduced. Note that the upper surface of mold resin 20 may be lower than the upper end of body 22b.

The distal end of exhaust part 22a is located above upper surface M of mold resin 20. In other words, battery case 14 is filled with mold resin 20 with the distal end of exhaust part 22a left exposed. With this configuration, the distal end of exhaust part 22a can open seal portion 23 above exhaust part 22a without being affected by mold resin 20. The gas is discharged from the electrode assembly through exhaust part 22a as a result of opening of seal portion 23. The discharged gas passes through the exhaust path formed between the inner surface of battery case 14 and upper surface M of mold resin 20 and is discharged to the outside of battery case 14 through an exhaust hole provided at battery case 14.

In Fig. 3, G1 represents a distance between the distal end of exhaust part 22a and upper surface M of mold resin 20. The range of G1 in which the exhaust path from laminate battery 10 can be reserved is not particularly limited since the range varies depending on the internal pressure of container 22 during an abnormality, the peeling strength of two laminate sheets in seal portion 23, and the like. However, the range of G1 is, for example, from 1 mm to 10 mm, preferably from 2 mm to 8 mm.

In Fig. 3, G2 represents a distance between the distal end of exhaust part 22a and upper end of laminate battery 10. The range of G2 in which the exhaust path from laminate battery 10 can be reserved is not particularly limited since the range varies depending on the internal pressure of container 22 during an abnormality, the peeling strength of two laminate sheets in seal portion 23, and the like. However, the range of G2 is, for example, from 1 mm to 10 mm, preferably from 2 mm to 8 mm.

As described above, according to the battery module according to the present disclosure, the battery case is filled with a predetermined amount of mold resin while the container of the laminate battery includes the exhaust part. Therefore, catching fire can be prevented while the exhaust path for discharging gas from the laminate battery can be provided when an abnormality occurs.

### REFERENCE MARKS IN THE DRAWINGS

- 1: battery module
- 10: laminate battery
- 12: partition wall
- 14: battery case
- 16: lid
- 20: mold resin
- 22: container
- 22a: exhaust part
- 22b: body
- 23: seal portion
- 24: first electrode lead
- 26: second electrode lead
- M: upper surface of mold resin

## Claims

1. A battery module comprising:
a battery case; and
a plurality of laminate batteries being stored in the battery case,
wherein
each of the plurality of laminate batteries includes
an electrode assembly,
a container configured to accommodate the electrode assembly, and
a seal portion configured to seal a periphery of the container,
the container includes
an exhaust part, and
a body, and
the battery case is filled with a mold resin with a distal end of the exhaust part left exposed.

2. The battery module according to Claim 1, wherein the body is buried in the mold resin.

3. The battery module according to Claim 1, wherein each of the plurality of laminate batteries includes a plurality of containers including the containers.

4. The battery module according to Claim 3, wherein the exhaust part of each of the plurality of containers protrudes beyond the body in an axial direction of the electrode assembly from one side of the electrode assembly of the body.

5. The battery module according to any one of Claims 1 to 4, wherein
the seal portion of each of the plurality of laminate batteries on a line extending from the distal end of the exhaust part is openable for formation of an exhaust path for a gas to be discharged from the electrode assembly, and
the exhaust path is disposed between an inner surface of the battery case and an upper surface of the mold resin filled into the battery case.
